(19) Europäisches Patentamt / European Patent Office / Office européen des brevets

(11) **EP 4 769 743 A1**

(12) **EUROPEAN PATENT APPLICATION**
published in accordance with Art. 153(4) EPC

(43) Date of publication:
**01.07.2026 Bulletin 2026/27**

(21) Application number: **23959798.2**

(22) Date of filing: **29.11.2023**

(51) International Patent Classification (IPC):
**H01M 50/30** (2021.01)    **H01M 50/367** (2021.01)

(52) Cooperative Patent Classification (CPC):
**H01M 50/30; H01M 50/367;** Y02E 60/10

(86) International application number:
**PCT/CN2023/135181**

(87) International publication number:
**WO 2025/111879 (05.06.2025 Gazette 2025/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology Co., Limited**
**Ningde, Fujian 352100 (CN)**

(72) Inventors:
• **CHEN, Xinxiang**
  **Ningde, Fujian 352100 (CN)**

• **HUANG, Shoujun**
  **Ningde, Fujian 352100 (CN)**
• **JIN, Haizu**
  **Ningde, Fujian 352100 (CN)**
• **WANG, Peng**
  **Ningde, Fujian 352100 (CN)**
• **ZHENG, Yulian**
  **Ningde, Fujian 352100 (CN)**
• **YANG, Rui**
  **Ningde, Fujian 352100 (CN)**

(74) Representative: **Kraus & Lederer PartGmbB**
**Thomas-Wimmer-Ring 15**
**80539 München (DE)**

(54) **BATTERY CELL, BATTERY, AND ELECTRIC DEVICE**

(57)    A battery cell, a battery, and an electric device. The battery cell comprises a casing, a pressure relief structure, and an electrode assembly. The casing is provided with a first wall. The pressure relief structure is disposed on the first wall. The electrode assembly is a wound electrode assembly and is disposed in the casing, and the electrode assembly comprises a flat portion and a first bending portion. Along a first direction, the first bending portion is disposed on the side of the flat portion facing the first wall. A first boundary line is provided between the first bending portion and the flat portion. The distance between the first boundary line and the first wall is L, wherein L ≥ 5 mm. The first direction is perpendicular to the axial direction of the electrode assembly.

FIG. 8

## Description

## TECHNICAL FIELD

This application relates to the field of battery technology, and in particular, to a battery cell, a battery, and an electric device.

## BACKGROUND

In recent years, new energy vehicles have developed rapidly. In the field of electric vehicles, batteries, as the power source of electric vehicles, play an irreplaceable important role. High requirements for both energy density and reliability are imposed on batteries which are core components of new energy vehicles.

In the related art, a pressure relief structure is generally provided in a battery cell, and pressure is relieved through the pressure relief structure when the battery cell experiences thermal runaway. However, in some technologies, during use of the battery cell, swelling deformation easily causes pulling and cracking of the pressure relief structure, affecting the reliability of the battery cell.

## SUMMARY

This application provides a battery cell, a battery, and an electric device, which can improve the use reliability of the battery cell while ensuring the energy density of the battery cell to a certain extent.

According to a first aspect, an embodiment of this application provides a battery cell, including: a casing, where the casing is provided with a first wall; a pressure relief structure, where the pressure relief structure is provided on the first wall; and an electrode assembly, where the electrode assembly is a wound electrode assembly and is provided in the casing, the electrode assembly includes a flat portion and a first bending portion, and along a first direction, the first bending portion is provided on a side of the flat portion facing the first wall; where a first boundary line is provided between the first bending portion and the flat portion, a distance between the first boundary line and the first wall is L, L $\geq 5$ mm, and the first direction is perpendicular to an axial direction of the electrode assembly.

In the above technical solution, the distance L between the first wall and the first boundary line, which is between the flat portion and the first bending portion that is between the flat portion and the first wall, is set to be greater than or equal to 5 mm, and the pressure relief structure is provided on the first wall. This helps weaken the action of a part of the casing close to the first wall on the first wall when the electrode assembly swells and deforms, weakening pulling action of other casing walls of the casing on the pressure relief structure through the first wall, reducing the probability of damage such as cracking of the pressure relief structure on the first wall, improving the reliability of the battery cell.

In some embodiments, the casing is further provided with a second wall; the second wall and the first wall are oppositely provided along the first direction; the electrode assembly further includes a second bending portion; along the first direction, the second bending portion is provided on a side of the flat portion facing the second wall; and the distance between the first boundary line and the first wall is greater than or equal to a distance between a second boundary line and the second wall.

In the above technical solution, setting the distance between the electrode assembly and the first wall to be less than or equal to the distance between the electrode assembly and the second wall can reduce the risk that the pressure relief structure is pulled and cracked. Further, the requirement for the arrangement position of the electrode assembly along the first direction is relatively low, facilitating assembly of the battery cell. In addition, part of space inside the casing adjacent to the second wall can be better utilized to a certain extent, so as to maintain the energy density of the battery cell.

In some embodiments, an inner surface of the first wall is formed with a boss, and the boss is provided opposite to the electrode assembly and is configured to support the electrode assembly.

In the above technical solution, the boss is formed on the inner surface of the first wall, and the boss is configured to support the electrode assembly, further appropriately increasing a distance between the first wall and an end, adjacent to the first wall, of the innermost turn of the electrode assembly along the first direction, further appropriately increasing the distance between the flat portion and the first wall. In this case, when the electrode assembly swells and deforms, the distance between the first wall and a position where the flat portion applies the main force to a corresponding casing wall can be increased to a certain extent, thereby further reducing the force received by the first wall, weakening the pulling action of other casing walls except the first wall of the casing on the pressure relief structure through the first wall due to the swelling of the electrode assembly, further improving the reliability of the battery cell.

In some embodiments, a side surface of the first bending portion facing the first wall is an arc surface, a radius of the arc surface is R, and R $\leq$ L.

In the above technical solution, the distance between the first boundary line and the first wall is set to be greater than or equal to the radius of the arc surface corresponding to the first bending portion, so that sufficient arrangement space is provided for the first bending portion; and after the electrode assembly is wound and disposed in the casing, no large force is generated between the first bending portion and the first wall, which easily causes wrinkling and the like of the first bending portion. This helps maintain the performance and use reliability of the electrode assembly.

In some embodiments, the electrode assembly is provided in plurality, axial directions of the plurality of electrode assemblies are parallel, the plurality of electrode assemblies are stacked along the axial direction of the electrode assembly and/or a third direction, and the third direction is perpendicular to the axial direction of the electrode assembly and the first direction.

In the above technical solution, a plurality of electrode assemblies are provided, so that values for a voltage and capacity of the battery cell are appropriate, and the ranges of voltage and capacity of the battery cell are increased, widening application of the battery cell.

In some embodiments, the battery cell further includes an insulation member, where at least part of the insulation member is provided between the first wall and the electrode assembly.

In the above technical solution, the insulation member is provided, such that at least part of the insulation member is provided between the first wall and the electrode assembly, and the insulation member separates the first wall and the electrode assembly, improving the insulation between the first wall and the electrode assembly. In addition, the insulation member raises the electrode assembly, further appropriately increasing the distance between the flat portion and the first wall, so that when the electrode assembly swells and deforms, the distance between the first wall and the position where the flat portion applies the main force to the corresponding casing wall can be increased to a certain extent, thereby further reducing the force received by the first wall, weakening the pulling action of other casing walls except the first wall of the casing on the pressure relief structure through the first wall due to the swelling of the electrode assembly, further improving the reliability of the battery cell.

In some embodiments, the at least part of the insulation member is provided between the pressure relief structure and the electrode assembly and is formed with a discharge portion, and the discharge portion includes: a first communication channel, where the first communication channel penetrates the insulation member along the first direction from a side of the insulation member facing the pressure relief structure; and/or a second communication channel, where the second communication channel penetrates an outer peripheral wall of the insulation member along a direction perpendicular to the first direction from a side of the insulation member facing the pressure relief structure.

In the above technical solution, the part of the insulation member provided between the pressure relief structure and the electrode assembly is formed with a discharge portion, and the discharge portion includes the first communication channel and/or the second communication channel, so that the insulation member is stably provided between the pressure relief structure and the electrode assembly; and the insulation member does not affect the pressure relief of the battery cell, enabling smooth pressure relief of the battery cell.

In some embodiments, a side of the at least part of the insulation member facing the pressure relief structure is formed with an avoidance groove, and the avoidance groove is disposed opposite to the pressure relief structure and communicates with the discharge portion.

In the above technical solution, the avoidance groove may be formed by recessing, in a direction away from the pressure relief structure, a partial surface that faces the pressure relief structure and that belongs to the part of the insulation member between the pressure relief structure and the electrode assembly. This reduces the impact of the insulation member on the pressure relief structure, and to a certain extent, improvement in pressure relief smoothness of the pressure relief structure is not affected.

In some embodiments, $L \leq 30$ mm.

In the above technical solution, $L \leq 30$ mm, reducing the risk that the pressure relief structure fails or is pulled and damaged, while ensuring a volumetric energy density of the battery cell. That is, the volumetric energy density of the battery cell is not excessively reduced.

In some embodiments, a thickness of the first wall is t1, and $0.4$ mm $\leq t1 \leq 2$ mm.

In the above technical solution, the thickness dimension of the first wall is limited. This can prevent excessive reduction in the volumetric energy density of the battery cell, and reduce the probability of liquid leakage due to damage at the pressure relief structure, improving the reliability of the battery cell.

In some embodiments, a width of the flat portion along the first direction is b, and $150$ mm $\leq b \leq 600$ mm.

In the above technical solution, $150$ mm $\leq b \leq 600$ mm. On the basis of improving the energy of the battery cell, the probability of liquid leakage due to damage of the pressure relief structure can be reduced, improving the reliability of the battery cell.

In some embodiments, a width of the flat portion along the first direction is b, and $0.0006 \leq t1/b \leq 0.0135$.

In the above technical solution, to a certain extent, the reduction in the volumetric energy density of the battery cell is avoided, and the pulling on the first wall can be reduced, reducing the probability that the weak part of the pressure relief structure is pulled and damaged, thereby reducing the probability of liquid leakage at the pressure relief structure, improving the reliability of the battery cell.

In some embodiments, a plurality of electrode sheet layers of the electrode assembly are stacked along the third direction, the casing has two third walls oppositely provided along the third direction, the first wall connects the two third walls, a thickness of the first wall is t1, a thickness of the third wall is t2, $t1 > t2$, and the third direction is perpendicular to the axial direction of the electrode assembly and the first direction.

In the above technical solution, the thicknesses of the first wall and the third wall are limited to improve the strength of the first wall and reduce the probability that the weak part of the pressure relief structure is pulled and damaged, thereby reducing the probability of liquid leakage, improving the reliability of the battery cell, and facilitating the manufacture and formation of the casing.

In some embodiments, 0.4 mm $\leq$ t1 $\leq$ 2 mm; and/or 0.2 mm $\leq$ t2 $\leq$ 1.5 mm; and/or 0.08 mm$^2$ $\leq$ t1 $\times$ t2 $\leq$ 3 mm$^2$; and/or t1 - t2 $\leq$ 1.8 mm.

In the above technical solution, the thicknesses of the first wall and the third wall are appropriate, to a certain extent further reducing the risk that the pressure relief structure fails or is pulled and cracked, improving reliability.

In some embodiments, the pressure relief structure and a pole of the battery cell are separately provided on walls on different sides of the casing.

In the above technical solution, the pole is connected to the tab of the electrode assembly, and there is a certain gap between the wall where the pole is located and the main body of the electrode assembly. By separately providing the pressure relief structure and the pole on walls on different sides of the casing, the distance between the pressure relief structure and the main body of the electrode assembly can be appropriately shortened to a certain extent, such that the distance between the pressure relief structure and the main body of the electrode assembly is not prone to limitation by the pole. When the battery cell experiences thermal runaway, most of the discharge medium inside the casing can directly flow from an edge of the main body of the electrode assembly to the pressure relief structure, thereby shortening the path through which the discharge medium flows to the pressure relief structure, enabling the discharge medium to quickly flow to the pressure relief structure, shortening a time for the discharge medium to reach the pressure relief structure, enabling more prompt pressure relief of the battery cell.

In some embodiments, the casing includes a casing body and a cover, one end of the casing body along the axial direction of the electrode assembly is open, the cover is provided at the open end of the casing body, the first wall is provided at an end of the casing body away from the open end, and the pole is provided on the cover.

In the above technical solution, the first wall is formed on the casing body. This simplifies the structure of the cover and reduces impact of the pole on the pressure relief structure, facilitating prompt pressure relief of the battery cell.

In some embodiments, the casing includes a casing body and covers, two ends of the casing body along the axial direction of the electrode assembly are open, the covers are provided at the open ends of the casing body, the first wall extends to the open ends on two sides, and each of the covers is provided with the pole.

In the above technical solution, the first wall is formed on the casing body. This simplifies the structure of the cover and can also reduce impact of the pole on the pressure relief structure, facilitating prompt pressure relief of the battery cell.

In some embodiments, the pressure relief structure and the first wall are integrally formed.

In the above technical solution, the pressure relief structure and the first wall are integrally formed, simplifying the formation method of the pressure relief structure, reducing components constituting the battery cell, simplifying the structure of the battery cell, reducing costs.

In some embodiments, an inner surface and/or an outer surface of the first wall are/is provided with a recess, and a bottom wall of the recess forms the pressure relief structure.

In the above technical solution, by providing the inner surface and/or the outer surface of the first wall with the recess, the bottom wall of the recess forms the pressure relief structure, which facilitates the processing and formation of the pressure relief structure.

In some embodiments, the first wall is formed with a score groove, a region of the first wall corresponding to the score groove is a weak part of the pressure relief structure, and the weak part is configured to rupture when the battery cell relieves pressure.

In the above technical solution, the first wall is formed with a score groove, the region of the first wall corresponding to the score groove forms a weak part of the pressure relief structure, facilitating the processing and formation of the pressure relief structure.

In some embodiments, the pressure relief structure and the first wall are separately provided, and the pressure relief structure is mounted on the first wall.

In the above technical solution, the pressure relief structure and the first wall are separate parts, and this facilitates mounting of the pressure relief structure on the casing, simplifying manufacturing and achieving high efficiency. This improves the production efficiency of the battery cell.

According to a second aspect, an embodiment of this application provides a battery, including the above battery cell.

In the above technical solution, since the above battery cell is used in the battery, the use reliability of the battery is improved.

According to a third aspect, an embodiment of this application provides an electric device, including the above battery, where the battery is configured to provide electric energy.

In the above technical solution, since the electric device is provided with the above battery, and the battery has high use reliability, improving the reliability of the electric device.

## BRIEF DESCRIPTION OF DRAWINGS

The above and/or additional aspects and advantages of this application become apparent and easy to understand from the description of embodiments with reference to the following drawings, in which:

FIG. 1 is a schematic structural diagram of a vehicle provided in some embodiments of this application;
FIG. 2 is an exploded view of a battery provided in some embodiments of this application;
FIG. 3 is a schematic structural diagram of a battery cell provided in some embodiments of this application;
FIG. 4 is an exploded view of a battery cell provided in some embodiments of this application;
FIG. 5 is a schematic structural diagram of a battery cell provided in some embodiments of this application;
FIG. 6 is a schematic diagram of a casing body and a pressure relief structure shown in FIG. 5;
FIG. 7 is a cross-sectional view of a battery cell provided in some embodiments of this application;
FIG. 8 is a cross-sectional view of a part of the battery cell shown in FIG. 7;
FIG. 9 is a cross-sectional view of a part of a casing of a battery cell provided in some embodiments of this application;
FIG. 10 is a cross-sectional view of a part of a battery cell provided in some embodiments of this application;
FIG. 11 is a schematic diagram of a pressure relief structure provided in some embodiments of this application;
FIG. 12 is an exploded view of a battery cell provided in some embodiments of this application;
FIG. 13 is a cross-sectional view of a battery cell provided in some embodiments of this application;
FIG. 14 is a cross-sectional view of a part of the battery cell shown in FIG. 13;
FIG. 15 is an exploded view of a battery cell provided in some embodiments of this application;
FIG. 16 is a cross-sectional view of a battery cell provided in some embodiments of this application;
FIG. 17 is a cross-sectional view of a part of the battery cell shown in FIG. 16; and
FIG. 18 is a schematic diagram of an electrode assembly and a first wall provided in some embodiments of this application.

Reference signs in the drawings:

electric device 1000; controller 300; motor 400; battery 200; battery cell 100; box body 101; first box body 101a; second box body 101b;
casing 1; first wall 11; recess 11a; score groove 11b; boss 11c; second wall 12; third wall 13; casing body 1a; cover 1b; pressure relief structure 2; electrode assembly 3; flat portion 3a; first bending portion 3b; second bending portion 3c; pole 4; insulation member 5; discharge portion 51; first communication channel 51a; and second communication channel 51b.

## DESCRIPTION OF EMBODIMENTS

To make the objectives, technical solutions, and advantages of the embodiments of this application clearer, the technical solutions in the embodiments of this application will be clearly described below with reference to the drawings in the embodiments of this application. It is clear that the described embodiments are some but not all embodiments of this application. Based on the embodiments in this application, all other embodiments obtained by those of ordinary skill in the art without creative efforts belong to the protection scope of this application.

Unless otherwise defined, all technical and scientific terms used in this application have the same meanings as commonly understood by those skilled in the art to which this application pertains. In this application, the terms used in the specification of this application are only for the purpose of describing specific embodiments, and are not intended to limit this application. The terms "include" and "have" and any variations thereof in the specification and claims of this application and the above description of the drawings are intended to cover non-exclusive inclusion. The terms "first", "second" and the like in the specification and claims of this application or the above drawings are used to distinguish different objects, and are not used to describe a specific order or primary-secondary relationship.

"An embodiment" in this application means that specific features, structures, or characteristics described with reference to the embodiment can be included in at least one embodiment of this application. The appearance of the phrase at various positions in the specification does not necessarily refer to the same embodiment, nor is it an independent or alternative embodiment that is mutually exclusive with other embodiments.

The term "and/or" in this application is merely an association describing associated objects, indicating that three relationships can exist, for example, A and/or B may indicate: A exists alone, both A and B exist, and B exists alone. In addition, the character "/" in this application generally indicates that the associated objects before and after the character are in an "or" relationship.

In the embodiments of this application, the same reference signs indicate the same components, and for brevity, detailed descriptions of the same components in different embodiments are omitted. It should be understood that the dimensions of various components in the embodiments of this application shown in the drawings are only exemplary illustrations, and should not constitute any limitation on this application.

"Plurality" in this application refers to more than two (including two).

In this application, the battery cell may include lithium-ion secondary battery, lithium-ion primary battery, lithium-sulfur battery, sodium-lithium ion battery, sodium-ion battery, magnesium-ion battery, nickel-metal hydride battery, nickelcadmium battery, lead-acid battery, or the like, and this is not limited in the embodiments of this application. The battery cell may be cylindrical, flat, or rectangular, or may be in another shape, and this is not limited in the embodiments of this application. Battery cells are generally classified into three types based on packaging methods: cylindrical battery cell, prismatic battery cell, and pouch battery cell, and this is not limited in the embodiments of this application.

The battery in the embodiments of this application refers to a single physical module that includes one or more battery cells to provide higher voltage and capacity. For example, the battery mentioned in this application may be a battery module, a battery pack, or the like. A battery module generally includes a plurality of battery cells. A battery generally includes a box body for packaging a plurality of battery cells or a plurality of battery modules, and the box body can prevent liquids or other foreign objects from affecting the charge or discharge of the battery cells. Certainly, the battery may alternatively not include a box body.

For example, a battery cell typically may include a casing, a cell assembly, and an electrolyte, where the casing is used to accommodate the cell assembly and the electrolyte, and the casing is provided with at least one positive electrode pole and at least one negative electrode pole. The cell assembly includes one or more electrode assemblies, and the electrode assembly is formed by stacking or winding the positive electrode sheet, the negative electrode sheet, and a separator. The casing may be a steel casing, an aluminum casing, a plastic (such as polypropylene) casing, a composite metal casing (such as a copper-aluminum composite casing), an aluminum-plastic film, or the like.

The positive electrode sheet generally may include a positive electrode sheet body and a positive active material layer. The positive active material layer is directly or indirectly applied to the positive electrode sheet body, the positive electrode sheet body not coated with the positive active material layer serves as a positive electrode tab sheet, and a plurality of positive electrode tab sheets are stacked and establish an electrical connection with the positive electrode pole. For example, a plurality of stacked positive electrode tab sheets may be directly welded to the positive electrode pole to establish an electrical connection; or the cell assembly may further include a positive electrode adapter sheet, a plurality of stacked positive electrode tab sheets are welded to an end of the positive electrode adapter sheet, and another end of the positive electrode adapter sheet is welded to the positive electrode pole, so that the positive electrode tab sheets establish an electrical connection with the positive electrode pole.

The negative electrode sheet generally may include a negative electrode sheet body and a negative active material layer. The negative active material layer is directly or indirectly applied to the negative electrode sheet body, the negative electrode sheet body not coated with the negative active material layer serves as a negative electrode tab sheet, and a plurality of negative electrode tab sheets are stacked and establish an electrical connection with the negative electrode pole. For example, a plurality of stacked negative electrode tab sheets may be directly welded to the negative electrode pole to establish an electrical connection; or the cell assembly may further include a negative adapter sheet, a plurality of stacked negative electrode tab sheets are welded to one end of the negative adapter sheet, and another end of the negative adapter sheet is welded to the negative electrode pole, so that the negative electrode tab sheets establish an electrical connection with the negative electrode pole. A material of the separator is not limited, for example, may be polypropylene, polyethylene, or the like.

A pressure relief structure on the battery cell in this application is used to release gas inside the battery cell when an internal pressure of the battery cell is excessively high (for example, due to overcharge and the like), to reduce the internal pressure of the battery cell and prevent the battery cell from exploding and burning due to rapid pressure increase inside the battery cell, thereby improving the safety of the battery cell. For example, the pressure relief structure may be an explosion-proof valve, an explosion-proof sheet, or the like.

In recent years, new energy vehicles have developed rapidly. In the field of electric vehicles, batteries, as the power source of electric vehicles, play an irreplaceable role. High requirements for both energy density and reliability are imposed on batteries which are core components of new energy vehicles.

In the related art, a battery includes a plurality of battery cells. During the continuous charge and discharge of the battery cells, a large amount of heat is generated. Generally, a pressure relief structure is provided in the battery cell, and pressure is relieved through the pressure relief structure when the battery cell experiences thermal runaway.

In design of a battery cell, considering the energy density of the battery, space occupancy of the electrode assembly of the battery cell needs to be maximized in the housing, so the distance between the electrode assembly and the housing wall where the pressure relief structure is located is shorter than the distance between the electrode assembly and a housing wall opposite to the pressure relief structure. However, when the electrode assembly of the battery cell swells and deforms, the casing of the battery cell also deforms, causing the casing to bulge. The pressure relief structure is usually provided on the casing, so the casing wall where the pressure relief structure is located is subjected to pulling action. When the pulling action reaches a certain degree, the pressure relief structure is easily pulled and cracked, leading to damage or failure of the pressure relief structure, and reducing the reliability of the battery cell. Therefore, developing safer battery systems free from non-thermal propagation has become the pursuit of various battery manufacturers and vehicle manufacturers.

In view of this, to improve the reliability of the battery cell, a battery cell is proposed, including a casing, a pressure relief structure, and an electrode assembly. The casing is provided with a first wall. The pressure relief structure is provided on the first wall. The electrode assembly is a wound electrode assembly and is provided in the casing. The electrode assembly includes a flat portion and a first bending portion. Along a first direction, the first bending portion is provided on a side of the flat portion facing the first wall, where a first boundary line is provided between the first bending portion and the flat portion, a distance between the first boundary line and the first wall is L, $L \geq 5$ mm, and the first direction is perpendicular to an axial direction of the electrode assembly.

In the above technical solution, the distance L between the first wall and the first boundary line, which is between the flat portion and the first bending portion that is between the flat portion and the first wall, is set to be greater than or equal to 5 mm, and the pressure relief structure is provided on the first wall. This helps weaken the action of a part of the casing close to the first wall on the first wall when the electrode assembly swells and deforms, weakening pulling action of other casing walls of the casing on the pressure relief structure through the first wall, reducing the probability of damage such as cracking of the pressure relief structure on the first wall, improving the reliability of the battery cell.

An embodiment of this application provides an electric device using the battery disclosed in this application as a power source. The electric device may be, but is not limited to, a mobile phone, a tablet, a notebook computer, an electric toy, an electric tool, an electric bicycle, an electric vehicle, a ship, a spacecraft, or the like. The electric toy may include a fixed or mobile electric toy, such as a game console, an electric vehicle toy, an electric ship toy, or an electric aircraft toy. The spacecraft may include an airplane, a rocket, a space shuttle, a spaceship, and the like.

For convenience of explanation, in the following embodiments, the electric device 1000 is a vehicle, and structures of the electric device 1000, a battery 200, and a battery cell 100 in this application are described in detail.

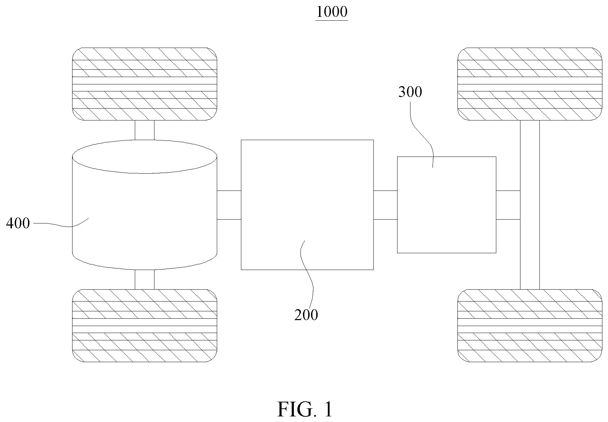

Refer to FIG. 1. FIG. 1 is a schematic structural diagram of an electric device 1000, which is a vehicle, provided in some embodiments of this application. The vehicle may be a fuel vehicle, a gas vehicle, or a new energy vehicle, and the new energy vehicle may be a pure electric vehicle, a hybrid vehicle, a range-extended vehicle, or the like. The vehicle is provided with a battery 200, and the battery 200 may be provided at a bottom, head, or tail of the vehicle. The battery 200 may be used for power supply of the vehicle, for example, the battery 200 may serve as an operation power source of the vehicle. The vehicle may further include a controller 300 and a motor 400. The controller 300 is used to control the battery 200 to supply power to the motor 400, for example, satisfying operation power needs of start, navigation, and driving of the vehicle. In some embodiments of this application, the battery 200 not only serves as the operation power source of the vehicle, but also as a driving power source of the vehicle, completely or partially replacing fuel or natural gas to provide driving power for the vehicle.

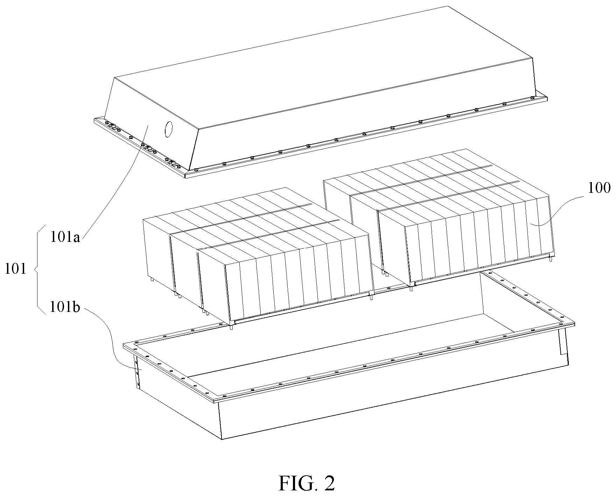

Refer to FIG. 2. FIG. 2 is an exploded view of a structure of a battery 200 provided in some embodiments of this application. The battery 200 includes a box body 101 and a plurality of battery cells 100, and the battery cells 100 are accommodated in the box body 101. The box body 101 is used to provide an assembly space for the battery cells 100, and the box body 101 may adopt multiple structures. In some embodiments, the box body 101 may include a first box body 101a and a second box body 101b; the first box body 101a and the second box body 101b are covered with each other; and the first box body 101a and the second box body 101b together define an accommodation cavity for accommodating battery cells. The second box body 101b may be a hollow structure with one end open. The first box body 101a may be a plate-like structure, and the first box body 101a is covers the open side of the second box body 101b, so that the first box body 101a and the second box body 101b together define an accommodation cavity; or the first box body 101a and the second box body 101b may both be hollow structures with one side open (as shown in FIG. 2), and the open side of the first box body 101a covers the open side of the second box body 101b. Certainly, the box body 101 formed by the first box body 101a and the second box body 101b may be in multiple shapes, for example, may be cylindrical or rectangular.

In the battery 200, the plurality of battery cells 100 may be connected in series, in parallel, or in series-parallel, where series-parallel connection means that the plurality of battery cells 100 are connected in both series and parallel. The plurality of battery cells 100 may be directly connected in series, in parallel, or in series-parallel, and then an entirety formed by the plurality of battery cells 100 is accommodated in the box body 101; or the battery 200 may be formed by connecting a plurality of battery cells 100 first in series, in parallel, or in series-parallel to form battery modules, and then connecting the plurality of battery modules in series, in parallel, or in series-parallel to form an entirety accommodated in the box body 101. The battery 200 may further include other structures, for example, the battery 200 may further include a busbar for electrical connection between the plurality of battery cells 100.

In some embodiments, the box body 101 may serve as part of the chassis structure of the vehicle. For example, part of the box body 101 may be at least part of the floor of the vehicle, or part of the box body 101 may be at least part of the cross beams and longitudinal beams of the vehicle.

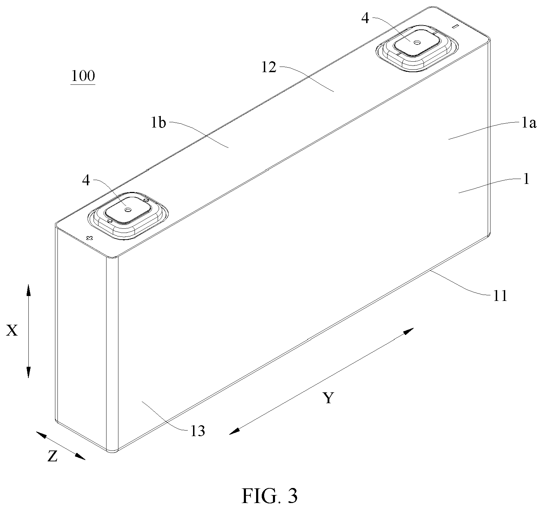

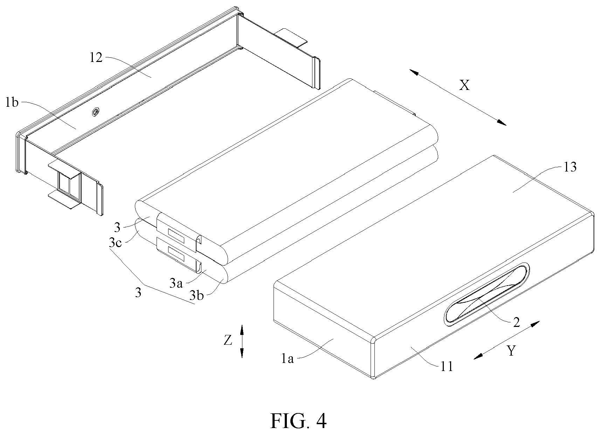

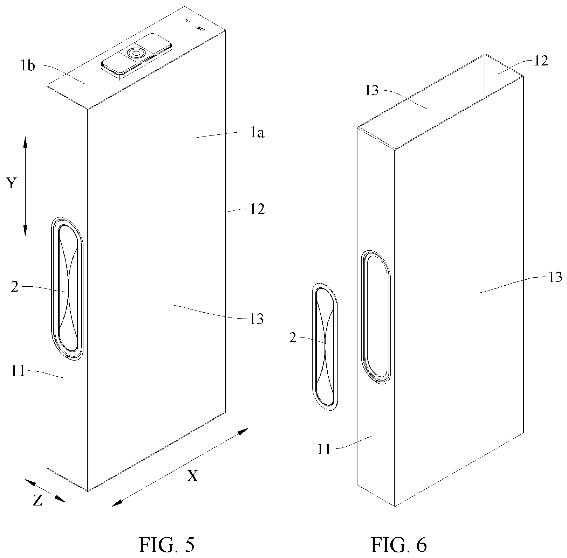

Refer to FIG. 3 to FIG. 6. FIG. 3 is a schematic structural diagram of a battery cell 100 provided in some embodiments of this application. FIG. 4 is a schematic structural diagram of a battery cell 100 provided in some embodiments of this application. FIG. 5 is a schematic structural diagram of a battery cell provided in some embodiments of this application. FIG. 6 is a schematic diagram of a casing body and a pressure relief structure shown in FIG. 5. The battery cell 100 is in a rectangular shape, and a height direction of the battery cell 100 is a first direction X, a length direction of the battery cell 100 is a second direction Y, and a thickness direction of the battery cell 100 is a third direction Z. The first direction X, the second direction Y, and the third direction Z are perpendicular to each other, but are not limited thereto; in other embodiments of this application, the battery cell 100 may alternatively be prismatic, flat, or the like.

Refer to FIG. 3 to FIG. 5. In the embodiments of this application, the battery cell 100 includes a casing 1 and a pressure relief structure 2, the casing 1 is provided with a first wall 11, the pressure relief structure 2 is provided on the first wall 11, and the pressure relief structure 2 is configured to be capable of relieving internal pressure of the battery cell 100.

The battery cell 100 further includes an electrode assembly 3, the electrode assembly 3 is provided in the casing 1, and the electrode assembly 3 is a wound electrode assembly. The electrode assembly 3 includes a flat portion 3a and a first bending portion 3b. Along the first direction, the first bending portion 3b is provided on a side of the flat portion 3a facing the first wall 11, the first direction is perpendicular to an axial direction of the electrode assembly 3, and the axial direction of the electrode assembly 3 may be understood as an extension direction of a winding central axis of the electrode assembly 3; for example, the axial direction of the electrode assembly 3 is the second direction Y in FIG. 4.

It can be learned that the first wall 11 may be a casing wall of the casing 1 along the first direction; and along the first direction, the first bending portion 3b is provided between the flat portion 3a and the first wall 11.

It can be understood that, in the embodiments of this application, two side surfaces of the flat portion 3a along the third direction Z are flat surfaces, and a side surface of the first bending portion 3b away from the flat portion 3a is a curved surface (such as an arc surface). In this case, a position of a first boundary line $\Omega1$ between the first bending portion 3b and the flat portion 3a can be determined based on whether a curvature of a surface of a portion of the electrode assembly 3 adjacent to the first wall 11 changes. A portion where a surface curvature changes is the first bending portion 3b, and a portion where a surface curvature does not change is the flat portion 3a. For example, a width of the flat portion 3a along the third direction is a fixed value, and a width of the first bending portion 3b along the third direction is a variable value. In this case, the position of the first boundary line $\Omega1$ between the first bending portion 3b and the flat portion 3a can be determined by whether the width of the electrode assembly 3 along the third direction changes. The third direction is perpendicular to the axial direction of the electrode assembly 3 and the first direction.

It can be understood that one electrode assembly 3 or a plurality of electrode assemblies 3 may be provided in the casing 1, and each electrode assembly 3 includes a plurality of anode electrode sheet layers and a plurality of cathode electrode sheet layers stacked along the third direction Z; when a plurality of electrode assemblies 3 are provided in the casing wall 1, an axial directions of the plurality of electrode assemblies 3 are arranged in parallel, and the plurality of electrode assemblies 3 may be sequentially provided along the third direction and/or the axial direction of the electrode assembly 3. For example, the electrode assembly 3 is a wound structure, that is, the plurality of electrode sheet layers of the electrode assembly 3 are stacked and wound, and a straight region 30 is formed. In the straight region 30, a part of the anode electrode sheet, that is, the anode electrode sheet layer, are stacked with a part of the cathode electrode sheet, that is, the cathode electrode sheet layer 31. For example, after winding, both the cathode electrode sheet layer and the anode electrode sheet layer can be penetrated by a shaft extending along the third direction. In this case, the swelling deformation of the electrode assembly 3 is particularly significant along the third direction, where the third direction is perpendicular to the first direction, and the third direction is perpendicular to the axial direction of the electrode assembly 3. The straight region 30 corresponds to the flat portion 3a.

It is clear that when the electrode assembly 3 swells, the swelling of the electrode assembly 3 mostly acts on the casing wall of the casing 1 along the third direction, so the impact of the electrode assembly 3 on the first wall 11 caused by swelling is less than that on other casing walls. Therefore, providing the pressure relief structure 2 on the first wall 11 helps reduce the risk that the pressure relief structure 2 is blocked or damaged due to the swelling of the electrode assembly 3.

The first boundary line $\Omega1$ is provided between the first bending portion 3b and the flat portion 3a. A distance between the first boundary line $\Omega1$ and the first wall 11 is L, and $L \geq 5$ mm. A position of the first boundary line $\Omega1$ relative to the first wall 11 is closely related to a position of the flat portion 3a along the first direction relative to the first wall 11. In the above setting, there is a large distance between the flat portion 3a and the first wall 11 in the first direction. When the electrode assembly 3 swells and deforms, the swelling deformation of the electrode assembly 3 are particularly significant in the third direction. The electrode assembly 3 applies force to the casing wall (for example, a third casing wall 13) of the casing 1 in the third direction, that is, the flat portion 3a contacts the above casing wall before the first bending portion 3b to apply force, in other words, a width of the first bending portion 3b in the third direction is smaller than that of the flat portion 3a, such that the force applied by the electrode assembly 3 to the casing wall is mainly the force applied by the flat portion 3a to the casing wall, increasing a distance between the first wall 11 and a position where the flat portion 3a applies the main force to the above casing wall, thereby reducing the force received by the first wall 11 from other casing walls. In this way, the first wall 11 is basically unstressed or the force received by the first wall 11 is relatively small. This weakens the pulling action of other casing walls (for example, the third casing wall 13) of the casing 1 except the first wall 11 on the pressure relief structure 2 through the first wall 11 due to the swelling of the electrode assembly 3, further reducing the probability of damage such as cracking of the pressure relief structure 2 on the first wall 11, improving the reliability of the battery cell 100.

In addition, the above setting in the embodiments of this application can reduce the risk that the pressure relief structure 2 is pulled and damaged, and further reduce the probability of liquid leakage due to failure of the pressure relief structure 2 or the like to a certain extent, further improving the reliability of the battery cell 100.

For example, the height direction of the battery cell 100 is the first direction X, the length direction of the battery cell 100 is the second direction Y, and the thickness direction of the battery cell 100 is the third direction Z. Along the first direction X, the distance L between the first boundary line Ω1 and the first wall 11 is greater than or equal to 5 mm. For example, the first direction X is an up-down direction. The first wall 11 is a bottom wall of the casing 1. Limiting the relative position between the first boundary line Ω1 and the first wall 11 helps reduce the force on a lower part of the casing 1 due to the swelling deformation of the electrode assembly 3, thereby reducing the pulling action on the pressure relief structure 2 on the bottom wall of the casing 1, and reducing the risk that the pressure relief structure 2 is pulled and cracked. In addition, providing the pressure relief structure 2 on the bottom wall of the casing 1 enables a bottom-spray design of the battery cell 100, alleviating the thermal propagation of the battery 200. For example, the battery 200 is generally disposed at the bottom of the electric device, with an electric component or personnel above it. When the battery 200 experiences thermal runaway, the battery cell 100 can discharge and relieve pressure downward, which can mitigate the fire situation in an upper part of the battery 200, especially when there are a large number of battery cells 100, that is, reducing electric component loss and reducing personnel injury. Adopting this structure can reduce the impact on the electric device under thermal runaway of the battery 200, and improve the use safety of the battery 200.

In the above technical solution, the distance L between the first wall 11 and the first boundary line Ω1, which is between the flat portion 3a and the first bending portion 3b that is between the flat portion 3a and the first wall 11, is set to be greater than or equal to 5 mm, and the pressure relief structure 2 is provided on the first wall 11.

This helps weaken the action of a portion of the casing 1 close to the first wall 11 on the first wall 11 when the electrode assembly 3 swells and deforms, weakening pulling action of other casing walls of the casing 1 on the pressure relief structure 2 through the first wall 11, reducing the probability of damage such as cracking of the pressure relief structure 2 on the first wall 11, improving the reliability of the battery cell 100.

It can be understood that the distance L may be greater than or equal to the maximum dimension of the first bending portion 3b along the first direction; for example, a surface of the first bending portion 3b away from the flat portion 3a is an arc surface, a radius of the arc surface is R, and $L \geq R$.

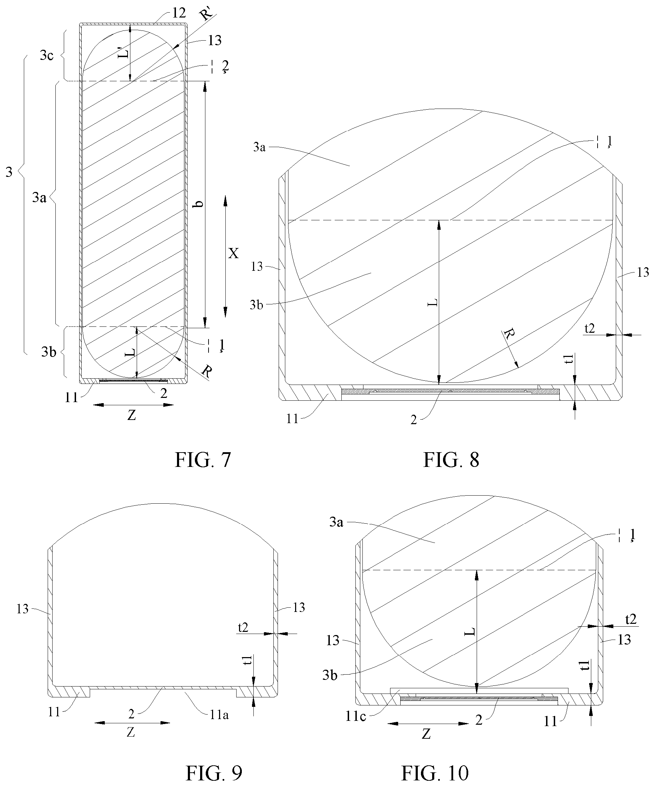

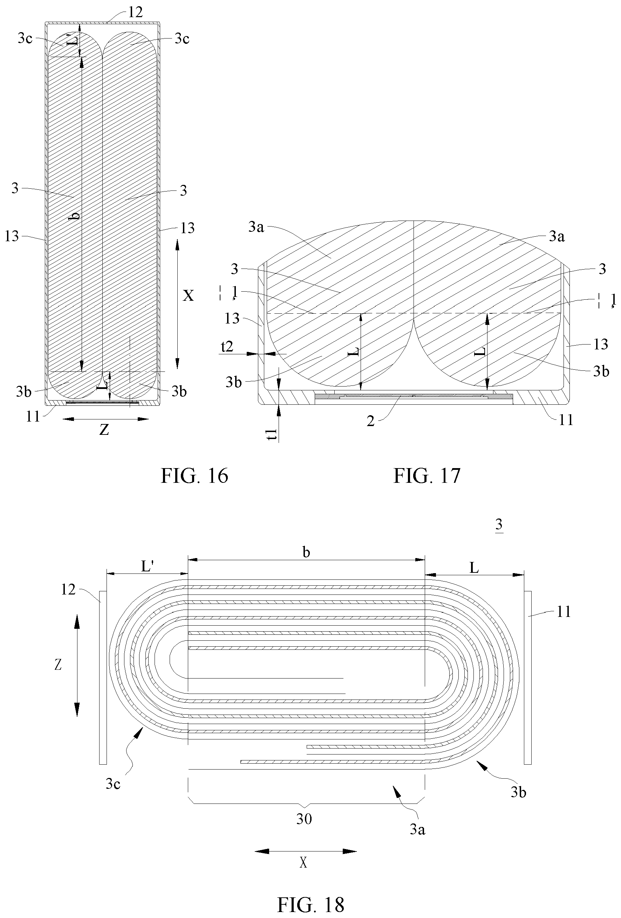

Refer to FIG. 7, FIG. 13, and FIG. 16. In some embodiments, the casing 1 is further provided with a second wall 12. The second wall 12 and the first wall 11 are oppositely provided along the first direction. The electrode assembly 3 further includes a second bending portion 3c. Along the first direction, the second bending portion 3c is provided on a side of the flat portion 3a facing the second wall 12. In this case, the first bending portion 3b and the second bending portion 3c may be oppositely provided along the first direction and respectively provided on two sides of the flat portion 3a along the first direction. A second boundary plane Ω2 is provided between the second bending portion 3c and the flat portion 3a. The distance L between the first boundary line Ω1 and the first wall 11 is greater than or equal to the distance L' between the second boundary plane Ω2 and the second wall 12. It can be learned that, along the first direction, between the first wall 11 and the second wall 12, the electrode assembly 3 may be centrally provided with respect to the first wall 11 and the second wall 12, or compared with the first wall 11, the electrode assembly 3 is closer to the second wall 12.

In the above technical solution, setting the distance between the first boundary line Ω1 and the first wall 11 to be greater than or equal to the distance between the second boundary line Ω2 and the second wall 12 can reduce the risk that the pressure relief structure 2 is pulled and cracked. Further, the requirement for the arrangement position of the electrode assembly 3 along the first direction is relatively low, facilitating assembly of the battery cell 100. In addition, part of space inside the casing 1 adjacent to the second wall 12 can be better utilized to a certain extent, so as to maintain the energy density of the battery cell 100.

It can be understood that, in the embodiments of this application, the two side surfaces of the flat portion 3a along the third direction Z are flat surfaces, and a side surface of the second bending portion 3c away from the flat portion 3a is a curved surface (such as an arc surface). In this case, the position of the second boundary line Ω2 between the second bending portion 3c and the flat portion 3a can be determined based on whether a curvature of a surface of a portion of the electrode assembly 3 adjacent to the first wall 12 changes. A portion where the surface curvature changes is the second bending portion 3c, and a portion where the surface curvature does not change is the flat portion 3a. For example, a width of the flat portion 3a along the third direction is a fixed value, and a width of the second bending portion 3c along the third direction is a variable value. In this case, the position of the second boundary line Ω2 between the second bending portion 3c and the flat portion 3a can be determined based on whether the width of the electrode assembly 3 along the third direction changes.

In addition, the distance L' may be greater than or equal to the maximum dimension of the second bending portion 3c along the first direction. For example, the surface of the second bending portion 3c away from the flat portion 3a is an arc surface, a radius of the arc surface is R, and L' ≥ R'.

Refer to FIG. 10. In some embodiments, an inner surface of the first wall 11 is formed with a boss 11c. The boss 11c may be formed by a portion of an inner surface of the first wall 11 protruding toward the interior of the battery cell 100. The boss 11c is provided opposite to the electrode assembly 3 along the first direction, and the boss 11c is configured to support the electrode assembly 3. For example, the boss 11c and the first bending portion 3b are oppositely provided along the first direction, and the boss 11c is configured to support the first bending portion 3b.

In the above technical solution, the boss 11c is formed on the inner surface of the first wall 11, and the boss 11c is configured to support the electrode assembly 3, further appropriately increasing a distance between the first wall 11 and an end, adjacent to the first wall 11, of the innermost turn of the electrode assembly 3 along the first direction, further appropriately increasing the distance between the flat portion 3a and the first wall 11. In this case, when the electrode assembly 3 swells and deforms, the distance between the first wall 11 and a position where the flat portion 3a applies the main force to a corresponding casing wall (for example, the third casing wall 13) can be increased to a certain extent, thereby further reducing the force received by the first wall 11, weakening the pulling action of other casing walls except the first wall 11 of the casing 1 on the pressure relief structure 2 through the first wall 11 due to the swelling of the electrode assembly 3, further improving the reliability of the battery cell 100.

It can be understood that the boss 11c may directly support the electrode assembly 2, or the boss 11c may indirectly support the electrode assembly 3.

Refer to FIG. 8. In some embodiments, a side surface of the first bending portion 3b facing the first wall 11 is an arc surface, a radius of the arc surface is R, and R ≤ L.

In the above solution, the distance between the first boundary line Ω1 and the first wall 11 is set to be greater than or equal to the radius R of the arc surface corresponding to the first bending portion 3b, so that sufficient arrangement space is provided for the first bending portion 3b; and after the electrode assembly 3 is wound and disposed in the casing 1, no large force is generated between the first bending portion 3b and the first wall 11, which easily causes wrinkling and the like of the first bending portion 3b. This helps maintain the performance and use reliability of the electrode assembly 3.

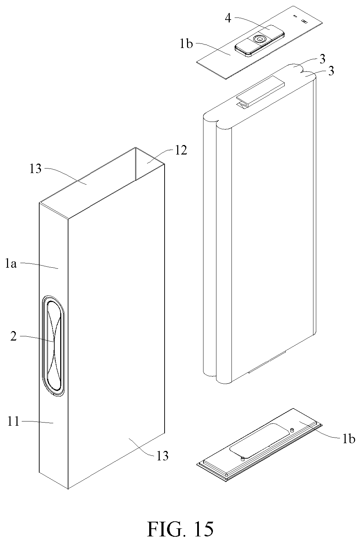

Refer to FIG. 15 to FIG. 17. In some embodiments, the electrode assembly 3 is provided in plurality, axial directions of the plurality of electrode assemblies 3 are parallel, the plurality of electrode assemblies 3 are stacked along the axial direction of the electrode assembly 3 and/or a third direction, and the third direction is perpendicular to the axial direction of the electrode assembly 3 and the first direction.

In the above technical solution, a plurality of electrode assemblies 3 are provided, so that values for a voltage and capacity of the battery cell 100 are appropriate, and the ranges of voltage and capacity of the battery cell 100 are increased, widening application of the battery cell 100.

For example, as shown in FIG. 15 to FIG. 17, two electrode assemblies 3 are provided, and the two electrode assemblies 3 are sequentially provided along the third direction. Certainly, three or more electrode assemblies 3 may alternatively be provided.

It can be understood that when a plurality of electrode assemblies 3 are provided, each electrode assembly 3 corresponds to a first boundary line Ω1, and distances between the plurality of first boundary lines Ω1 and the first wall 11 may be equal or unequal.

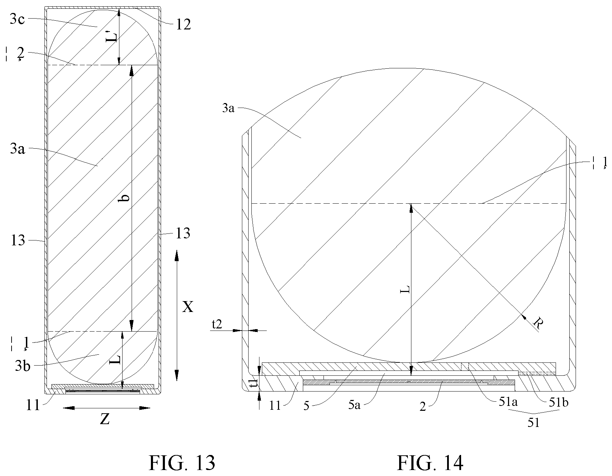

Refer to FIG. 13 and FIG. 14. In some embodiments, the battery cell 100 further includes an insulation member 5, and at least part of the insulation member 5 is provided between the first wall 11 and the electrode assembly 3.

In the above technical solution, the insulation member 5 is provided, such that at least part of the insulation member 5 is provided between the first wall 11 and the electrode assembly 3, and the insulation member 5 separates the first wall 11 and the electrode assembly 3, improving the insulation between the first wall 11 and the electrode assembly 3. In addition, the insulation member 5 raises the electrode assembly 3, further appropriately increasing the distance between the flat portion 3a and the first wall 11, so that when the electrode assembly 3 swells and deforms, the distance between the first wall 11 and the position where the flat portion 3a applies the main force to the corresponding casing wall (for example, the third casing wall 13) can be increased to a certain extent, thereby further reducing the force received by the first wall 11, weakening the pulling action of other casing walls except the first wall 11 of the casing 1 on the pressure relief structure 2 through the first wall 11 due to the swelling of the electrode assembly 3, further improving the reliability of the battery cell 100.

For example, the insulation member 5 is a flat plate structure.

Refer to FIG. 13 and FIG. 14. In some embodiments, the above at least part of the insulation member 5 is provided between the pressure relief structure 2 and the electrode assembly 3, and the above at least part of the insulation member 5 is formed with a discharge portion 51. The discharge portion 51 includes a first communication channel 51a and/or a second communication channel 51b. The first communication channel 51a penetrates the insulation member 5 along the first direction from a side of the insulation member 5 facing the pressure relief structure 2, so that the first communication channel 51a communicates with two sides of the insulation member 5 along the first direction. The second communication channel 51b penetrates an outer peripheral wall of the insulation member 5 along a direction perpendicular to the first direction from a side of the insulation member 5 facing the pressure relief structure 2, similarly enabling the second communication channel 51b to communicate with two sides of the insulation member 5 along the first direction.

It can be understood that the second communication channel 51a may penetrate the outer peripheral wall of the insulation member 5 along any direction perpendicular to the first direction. It can be learned that the discharge portion 51 may be configured to allow a discharge medium inside the battery cell 100 to move from a side of the insulation member 5 facing away from the pressure relief structure 2 to a side of the insulation member 5 facing the pressure relief structure 2.

In the above technical solution, the part of the insulation member 5 provided between the pressure relief structure 2 and the electrode assembly 3 is formed with a discharge portion 51, and the discharge portion 51 includes the first communication channel 51a and/or the second communication channel 51b, so that the insulation member 5 is stably provided between the pressure relief structure 2 and the electrode assembly 3; and the insulation member 5 does not affect the pressure relief of the battery cell 100, enabling smooth pressure relief of the battery cell 100.

Optionally, when the discharge portion 51 includes the first communication channel 51a, the first communication channel 51a may be provided opposite to the pressure relief structure 2 along the first direction, so as to shorten a discharge path of the battery cell 100; and when the discharge portion 51 includes the second communication channel 51b, at least part of the second communication channel 51b is misaligned with the pressure relief structure 2 along a direction perpendicular to the first direction.

Refer to FIG. 14. In some embodiments, a side of the above at least part of the insulation member 5 facing the pressure relief structure 2 is formed with an avoidance groove 5a, the avoidance groove 5a is disposed opposite to the pressure relief structure 2, and the avoidance groove 5a communicates with the discharge portion 51.

In the above solution, the avoidance groove 5a may be formed by recessing, in a direction away from the pressure relief structure 2, a partial surface that faces the pressure relief structure 2 and that belongs to the part of the insulation member 5 between the pressure relief structure 2 and the electrode assembly 3. This reduces the impact of the insulation member 5 on the pressure relief structure 2, and to a certain extent, improvement in pressure relief smoothness of the pressure relief structure 2 is not affected.

In some embodiments, $L \leq 30$ mm.

In the above technical solution, $L \leq 30$ mm, reducing the risk that the pressure relief structure 2 is pulled and damaged, or fails, while ensuring a volumetric energy density of the battery cell 100. That is, the volumetric energy density of the battery cell 100 is not excessively reduced.

For example, L may be 5 mm, 6 mm, 7 mm, 8 mm, 9 mm, 10 mm, 12 mm, 15 mm, 18 mm, 20 mm, 23 mm, 25 mm, 28 mm, 30 mm, or the like.

Refer to FIG. 8 to FIG. 10, FIG. 14, and FIG. 17. In some embodiments, a thickness of the first wall 11 is t1, and $0.4$ mm $\leq t1 \leq 2$ mm.

The thickness dimension of the first wall 11 is t1, where the thickness of the first wall 11 is a distance between inner and outer side surfaces of the first wall 11. For example, the first wall 11 may form a flat plate structure, in which case thicknesses at different positions of the first wall 11 are the same; or the first wall 11 may include a main region and a local region, where the local region may be provided with a groove, or provided with a protrusion, or provided with a hole or another special structure. The local region may be located around the main region, or located in the middle of the main region, or may be dispersedly arranged. In this case, the thickness dimension of the first wall 11 is the thickness dimension of the main region.

An excessively large thickness dimension of the first wall 11 leads to excessive occupation of a space of the overall battery cell 100 by the casing 1, and correspondingly leads to a reduced space for the corresponding electrode assembly 3, thereby leading to a reduction in the volumetric energy density of the battery cell 100. If the thickness dimension of the first wall 11 is excessively small, the first wall 11 is excessively thin, and when the electrode assembly 3 swells, the first wall 11 is easily pulled and deformed, in which case a weak part of the pressure relief structure 2 is easily pulled and damaged, causing failure, liquid leakage, or the like at the pressure relief structure 2.

For example, t1 may be any point value among 0.4 mm, 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, or 2 mm, or may be a value in a range between any two of the values.

In the above technical solution, the thickness dimension of the first wall 11 is limited. This can prevent excessive reduction in the volumetric energy density of the battery cell 100, and reduce the probability of liquid leakage due to damage at the pressure relief structure 2, improving the reliability of the battery cell 100.

Refer to FIG. 7, FIG. 13, and FIG. 16. In some embodiments, a width of the flat portion 3a along the first direction is b, and 150 mm ≤ b ≤ 600 mm.

If b is excessively small, the dimension of the flat portion 3a along the first direction is relatively small, and an overall dimension of the electrode assembly 3 along the first direction is relatively small, which relatively causes a reduction in the energy of the battery cell 100. If b is excessively large, a dimension of the flat portion 3a along the first direction is relatively large, and the overall dimension of the electrode assembly 3 along the first direction is relatively large. In this case, since a swelling amount of the electrode assembly 3 is large, the pulling force on the surface where the pressure relief structure 2 is located is increased, in which case a weak part of the pressure relief structure 2 is easily pulled and damaged, causing liquid leakage or the like at the pressure relief structure 2.

Thus, b is limited to 150 mm to 600 mm, and b may be any one point value among 150 mm, 200 mm, 250 mm, 300 mm, 350 mm, 400 mm, 450 mm, 500 mm, 550 mm, or 600 mm, or may be a value in a range between any two of the values.

Through the above limitation, on the basis of improving the energy of the battery cell 100, the probability of liquid leakage due to damage of the pressure relief structure 2 can be reduced, improving the reliability of the battery cell 100.

Further, 220 mm ≤ b ≤ 530 mm.

Herein, b may be any one point value among 220 mm, 260 mm, 280 mm, 300 mm, 320 mm, 340 mm, 360 mm, 380 mm, 400 mm, 420 mm, 440 mm, 460 mm, 480 mm, 500 mm, 520 mm, or 530 mm, or may be a value in a range between any two of the values.

Within the above range, the energy of the battery cell 100 can be further optimized, and further, the probability of liquid leakage due to damage of the pressure relief structure 2 can be reduced, improving the reliability of the battery cell 100.

In some embodiments, 0.0006 ≤ t1/b ≤ 0.0135. When t1/b is excessively small, the wall thickness of the first wall 11 is excessively small, a strength of the first wall 11 is low, and therefore the first wall 11 is easily pulled and deformed, and the pressure relief structure 2 is easily pulled and damaged, leading to liquid leakage; or the width of the flat portion 3a along the first direction is excessively large, the swelling amount of the electrode assembly 3 is large, which increases the pulling on the first wall 11, in which case, the weak part of the pressure relief structure 2 is pulled and damaged, leading to liquid leakage of the pressure relief structure 2. When t1/b is excessively large, the wall thickness of the first wall 11 is excessively large. In this case, the casing 1 along the first direction occupies excessive overall volume of the battery cell 100, or the width of the flat portion 3a along the first direction is excessively small, and correspondingly, a dimension of the electrode assembly 3 is excessively small, leading to a reduction in the volumetric energy density of the battery cell 100.

In view of this, t1/b is limited to 0.0006 and 0.0135, and t1/b may be any point value among 0.0006, 0.001, 0.002, 0.005, 0.006, 0.007, 0.008, 0.009, 0.01, 0.011, 0.0115, 0.012, 0.0125, 0.013, or 0.0135, or may be a value in a range between any two of the values.

Refer to FIG. 8 to FIG. 10, FIG. 14, and FIG. 17. In some embodiments, a plurality of electrode sheet layers of the electrode assembly 3 are stacked along the third direction, the casing 1 has two third walls 13 oppositely provided along the third direction, the first wall 11 connects the two third walls 13, a thickness of the first wall 11 is t1, a thickness of the third wall 13 is t2, t1 > t2, and the third direction is perpendicular to the axial direction of the electrode assembly and the first direction.

The thickness dimension of the third wall 13 is t2, where the thickness of the third wall 13 is a distance between inner and outer side surfaces of the third wall 13, or a thickness of the third wall 13 along the third direction. For example, the third wall 13 may form a flat plate structure, in which case thicknesses at different positions of the third wall 13 are the same; or the third wall 13 may include a main region and a local region, where the local region may be provided with a groove, or provided with a protrusion, or provided with a hole or another special structure. The local region may be located around the main region, or located in the middle of the main region, or may be dispersedly arranged. In this case, the thickness dimension of the third wall 13 is the thickness dimension of the main region.

Herein, t1 > t2, that is, the thickness of the first wall 11 is greater than the thickness of the third wall 13. Since the pressure relief structure 2 is provided on the first wall 11, relatively increasing the thickness of the first wall 11 can improve the strength of the first wall 11 and reduce the risk of damage at the pressure relief structure 2, thereby reducing the probability of liquid leakage at the pressure relief structure 2. In addition, during manufacture of the casing 1, which may be formed by mold stamping, since the thickness of the first wall 11 is greater than the thickness of the third wall 13, the casing 1 may be manufactured by stamping a plate with the same thickness as the first wall 11, simplifying the manufacture of the casing 1.

In the technical solution of the embodiments of this application, the thicknesses of the first wall 11 and the third wall 13 are limited to improve the strength of the first wall 11 and reduce the probability that the weak part of the pressure relief structure 2 is pulled and damaged, thereby reducing the probability of liquid leakage, improving the reliability of the battery cell 100, and facilitating the manufacture and formation of the casing 1.

In some embodiments, the battery cell 100 satisfies at least one of the following conditions: (1) 0.4 mm

$\leq$ t1 $\leq$ 2 mm; (2) 0.2 mm $\leq$ t2 $\leq$ 1.5 mm; (3) 0.08 mm$^2$ $\leq$ t1 $\times$ t2 $\leq$ 3 mm$^2$; and (4) t1 - t2 $\leq$ 1.8 mm.

For the condition 0.2 mm $\leq$ t2 $\leq$ 1.5 mm, if the thickness dimension of the third wall 13 is excessively large, the casing 1 occupies excessive overall volume of the battery cell 100, and the space occupied by the electrode assembly 3 along the third direction is reduced, leading to a reduction in the volumetric energy density of the battery cell 100; or if the thickness dimension of the third wall 13 is excessively small, the third wall 13 is excessively thin, and when the electrode assembly 3 swells, an deformation amount of the third wall 13 is may be excessively large, leading to significant pulling on the first wall 11, easily causing the pressure relief structure 2 to be pulled and damaged, causing liquid leakage or the like at the pressure relief structure 2.

In this case, t2 may be any one point value among 0.2 mm, 0.3 mm, 0.4 mm, 0.5 mm, 0.6 mm, 0.7 mm, 0.8 mm, 0.9 mm, 1 mm, 1.1 mm, 1.2 mm, 1.3 mm, 1.4 mm, or 1.5 mm, or may be a value in a range between any two of the values.

The thickness dimension of the third wall 13 is limited. This can prevent excessive reduction in the volumetric energy density of the battery cell 100, and improve the structural strength of the third wall 13, reducing the deformation amount of the third wall 13, thereby reducing the pulling on the first wall 11, reducing the probability of liquid leakage due to pulling and damage of the pressure relief structure 2, improving the reliability of the battery cell 100.

Further, 0.3 mm $\leq$ t2 $\leq$ 1.2 mm, where t2 may be any one point value among 0.3 mm, 0.4 mm, 0.5 mm, 0.6 mm, 0.7 mm, 0.8 mm, 0.9 mm, 1 mm, 1.1 mm, or 1.2 mm, or may be a value in a range between any two of the values. When t2 is within the above range, excessive reduction in the volumetric energy density of the battery cell 100 can be further prevented, and the structural strength of the third wall 13 can be improved, reducing the deformation amount of the third wall 13, thereby reducing the pulling on the first wall 11, reducing the probability of liquid leakage caused by pulling and damage of the pressure relief structure 2, improving the reliability of the battery cell 100.

For the condition 0.4 mm $\leq$ t1 $\leq$ 2 mm, if the thickness dimension of the first wall 11 is excessively large, the casing 1 along the first direction occupies excessive overall space of the battery cell 100, and the space occupied by the electrode assembly 3 along the first direction is correspondingly reduced, leading to a reduction in the volumetric energy density of the battery cell 100. If the thickness dimension of the first wall 11 is excessively small, the first wall 11 is excessively thin, and when the electrode assembly 3 swells, the third wall 13 deforms and pulls the first wall 11, and therefore the first wall 11 is easily pulled and deformed, in which case the weak part of the pressure relief structure 2 is easily pulled and damaged, causing liquid leakage or the like at the pressure relief structure 2.

In this case, t1 may be any one point value among 0.4 mm, 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, or 2 mm, or may be a value in a range between any two of the values.

Limiting the thickness dimension of the first wall 11 can prevent excessive reduction in the volumetric energy density of the battery cell 100, and reduce the probability of liquid leakage due to damage at the pressure relief structure 2, improving the reliability of the battery cell 100.

Further, 0.5 mm $\leq$ t1 $\leq$ 1.8 mm, where t1 may be any one point value among 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, or 1.8 mm, or may be a value in a range between any two of the values. The thickness dimension of the first wall 11 within the above range can further prevent excessive reduction in the volumetric energy density of the battery cell 100, and reduce the probability of liquid leakage due to damage of the pressure relief structure 2, improving the reliability of the battery cell 100.

For the condition 0.08 mm$^2$ $\leq$ t1 $\times$ t2 $\leq$ 3 mm$^2$, when t1 $\times$ t2 is excessively small, t2 is excessively small, and the structural strength of the third wall 13 is small. When the electrode assembly 3 swells, the deformation amount of the third wall 13 is excessively large, thereby increasing the pulling on the surface where the pressure relief structure 2 is located, easily causing the weak part of the pressure relief structure 2 to be pulled and damaged, causing liquid leakage at the pressure relief structure 2; or t1 is excessively small, that is, the thickness of the first wall 11 is excessively small, and the structural strength of the first wall 11 is small, in which case when the electrode assembly 3 swells, the first wall 11 is easily pulled and deformed, thereby causing the weak part of the pressure relief structure 2 to be easily pulled and damaged, leading to liquid leakage or the like at the pressure relief structure 2.

When t1 $\times$ t2 is excessively large, t2 is excessively large, and the third wall 13 occupies excessive space along the third direction; or t1 is excessively large, and the first wall 11 occupies excessive space along the first direction, leading to a reduction in the arrangement space for the electrode assembly 3 along the third direction or the first direction, thereby leading to a reduction in the volumetric energy density of the battery cell 100. In view of this, t1 $\times$ t2 is limited to 0.08 mm$^2$ to 3 mm$^2$, and t1 $\times$ t2 may be any one point value among 0.08 mm$^2$, 1 mm$^2$, 1.2 mm$^2$, 1.4 mm$^2$, 1.6 mm$^2$, 1.8 mm$^2$, 2 mm$^2$, 2.2 mm$^2$, 2.4 mm$^2$, 2.6 mm$^2$, 2.8 mm$^2$, or 3 mm$^2$, or may be a value in a range between any two of the values.

For the condition t1 - t2 $\leq$ 1.8 mm, an excessively large value of t1 - t2 is not conducive to the manufacture and formation of the casing 1, and when t1 - t2 is excessively large, an excessively large value of t1 causes the first wall 11 to occupy excessive space along the first direction, and correspondingly the electrode assembly 3 occupies less space along the first direction, affecting the volumetric energy density of the battery cell 100; or an excessively small value of t2 leads to an excessive small thickness of the third wall 13, in which case the third wall 13 has a low structural strength and is easily deformed, thereby increasing the pulling on the surface where the pressure relief structure 2 is located, easily causing the weak part of the pressure relief structure 2 to be pulled and damaged, causing liquid leakage at the pressure relief structure 2. Through the above limitation, on the basis of optimizing the volumetric energy density of the battery cell 100 and reducing the probability of liquid leakage of the pressure relief structure 2, the manufacture and formation of the casing 1 are facilitated.

Optionally, the third wall 13 is a wall with the largest area of the casing 1, and then the third wall 13 may be understood as a "large face" of the casing 1. It can be learned that the first wall 11 is a narrow casing wall connected between the two third walls 13. After the electrode assembly 3 is mounted in the casing 1, the third wall 12 is opposite to the flat portion 3a of the electrode assembly 3. When the internal pressure of the casing 1 reaches a certain value, the pressure relief structure 2 relieves pressure. When the electrode assembly 3 swells, the electrode assembly 3 pushes against the third wall 13 along the third direction to expand the casing 1 toward the outside of the casing 1, causing the casing 1 to deform. The third wall 13 is the main force-bearing surface and deforms greatly. The force on the first wall 11 is smaller than the force on the third wall 13. Therefore, by providing the pressure relief structure 2 on the first wall 11, the pressure relief structure 2 is provided on a smaller force-bearing surface of the casing 1. Compared with providing the pressure relief structure 2 on the third wall 13, the pressure relief structure 2 bears a smaller force, thereby further reducing the risk that the pressure relief structure 2 fails or is pulled and damaged.

It is clear that since the first wall 11 is not the wall with the largest area of the casing 1, providing the pressure relief structure 2 on the first wall 11 means the pressure relief structure 2 is provided on the smaller force-bearing surface of the casing 1. Compared with providing the pressure relief structure 2 on the third wall 13, when the electrode assembly 3 swells and deforms, the pressure relief structure 2 bears a smaller force, further reducing the risk that the pressure relief structure 2 fails or is pulled and damaged.

Refer to FIG. 4, FIG. 5, and FIG. 10. In some embodiments, the pressure relief structure 2 and a pole 4 of the battery cell 100 are separately provided on walls on different sides of the casing 1, that is, the pole 4 is provided on another wall of the casing 1 except the first wall 11.

In the above technical solution, the pole 4 is connected to the tab of the electrode assembly 3, and there is a certain gap between the wall where the pole 4 is located and the main body of the electrode assembly 3.

By separately providing the pressure relief structure 2 and the pole 4 on walls on different sides of the casing 1, the distance between the pressure relief structure 2 and the main body of the electrode assembly 3 can be appropriately shortened to a certain extent, such that the distance between the pressure relief structure 2 and the main body of the electrode assembly 3 is not prone to limitation by the pole 4. When the battery cell 100 experiences thermal runaway, most of the discharge medium inside the casing 1 can directly flow from an edge of the main body of the electrode assembly 3 to the pressure relief structure 2, thereby shortening the path through which the discharge medium flows to the pressure relief structure 2, enabling the discharge medium to quickly flow to the pressure relief structure 2, shortening a time for the discharge medium to reach the pressure relief structure 2, enabling more prompt pressure relief of the battery cell 100. The tab includes a plurality of tab sheets 34.

Refer to FIG. 4, FIG. 5, and FIG. 10. In some embodiments, the casing 1 includes a casing body 1a and a cover 1b, at least one end of the two ends of the casing body 1a along the axial direction of the electrode assembly 3 is open, the cover 1b is provided at the open end of the casing body 1a, and the first wall 11 is formed on the casing body 1a.

For example, the casing body 1a may be a hollow structure with one end formed with an opening, and the casing body 1a may alternatively be a hollow structure with openings formed at two opposite ends. The casing body 1a may be in multiple shapes, for example, may be prismatic or the like. The cover 1b is a component that closes the opening of the casing body 1a to isolate an internal environment of the battery cell 100 from an external environment. The cover 1b and the casing body 1a together define a mounting cavity for accommodating the electrode assembly 3, the electrolyte, and other components. A shape of the cover 1b may match a shape of the casing body 1a, for example, the casing body 1a is a rectangular structure, and the cover 1b is a rectangular plate structure matching the casing body 1a; for another example, the casing body 1a is a cylindrical structure, and the cover 1b is a circular plate structure matching the casing body 1a. The cover 1b may also be of multiple materials, such as copper, iron, aluminum, steel, aluminum alloy, or plastic. Materials of the cover 1b and the casing body 1a may be the same or different.

In an embodiment where the casing body 1a has an opening at one end, as shown in FIG. 4, one cover 1b may be correspondingly provided. In an embodiment where the casing body 1a has openings at two opposite ends, as shown in FIG. 5, FIG. 6, and FIG. 10, two covers 1b may be correspondingly provided, where the two covers 1b respectively close the two openings of the casing body 1a, and the two covers 1b and the casing body 1a together define the mounting cavity.

The casing body 1a is provided with the first wall 11, and the pressure relief structure 2 may be integrally formed with the first wall 11 or separately provided from the first wall 11. By providing the pressure relief structure 2 on the casing body 1a, the structure of the cover 1b can be simplified, and a distance between the pressure relief structure 2 and the main body of the electrode assembly 3 can be shortened, thereby shortening the path through which the discharge medium flows to the pressure relief structure 2 during pressure relief, reducing the time for the discharge medium to reach the pressure relief structure 2, enabling more prompt pressure relief of the battery cell 100, thereby further improving the reliability of the battery cell 100.

It can be learned that by forming the first wall 11 on the casing body 1a, the structure of the cover 1b can be simplified, and a distance between the pressure relief structure 2 and the main body of the electrode assembly 3 can be shortened, thereby shortening the path through which the discharge medium flows to the pressure relief structure 2 during pressure relief, reducing the time for the discharge medium to reach the pressure relief structure 2, enabling more prompt pressure relief of the battery cell 100.

In the embodiment where the casing body 1a has an opening at one end, the first wall 11 is provided at an end of the casing body 1a away from the open end, then the first wall 11 and the cover 1b are oppositely provided along the first direction. In this case, the pole 4 is provided on the cover 1b. In the embodiment where the casing body 1a has openings at two opposite ends, the first wall 11 extends to the open ends on two sides, and each cover 1b is provided with the pole 4.

In the above solution, by appropriately setting the relative layout of the casing body 1a, the cover 1b, and the pole 4, the processing and assembly of the casing body 1a and the cover 1b can be facilitated, and the assembly of the pole 4 and the casing 1 can be improved.

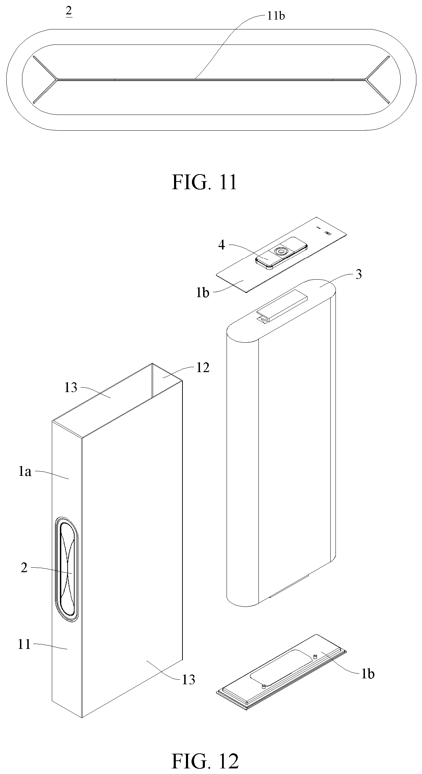

Refer to FIG. 9 and FIG. 11. In some embodiments, the pressure relief structure 2 and the first wall 11 are integrally formed; or as shown in FIG. 5 to FIG. 8, the pressure relief structure 2 and the first wall 11 are separately provided, and the pressure relief structure 2 is mounted on the first wall 11, for example, the first wall 11 is provided with a through hole, and the pressure relief structure 2 is mounted in the through hole.

When the pressure relief structure 2 and the first wall 11 are integrally formed, a score groove 11b may be provided on the first wall 11, a region of the first wall 11 corresponding to the score groove 11b forms a weak part of the pressure relief structure 2, and the weak part is configured to rupture when the battery cell 100 relieves pressure. The formation method of the pressure relief structure 2 is simple, and the production cost is low. It can be understood that an inner surface of the first wall 11 and/or an outer surface of the first wall 11 are/is formed with the score groove 11b.

It can be learned that, in the above technical solution, the pressure relief structure 2 and the first wall 11 are integrally formed, simplifying the formation method of the pressure relief structure 2, reducing components constituting the battery cell 100, simplifying the structure of the battery cell 100, reducing costs.

In the embodiments of this application, a shape of the score groove 11b is not specifically limited. For example, the score groove 11b includes one first straight groove segment and four second straight groove segments, and two ends of each first straight groove segment are respectively connected to two second straight groove segments provided at a preset angle, enabling both ends of the score groove 41 to roughly form a Y shape.

When the pressure relief structure 2 and the first wall 11 are separately provided, the pressure relief structure 2 and the casing 1 are two separate components, which are formed separately and then mounted with each other. The pressure relief structure 2 may be components such as an explosion-proof sheet, an explosion-proof valve, or a safety valve, and the pressure relief structure 2 may be mounted on the first wall 11 by bonding, welding, and the like. The first wall 11 is provided with a through hole, and the pressure relief structure 2 is mounted in the through hole. When the internal pressure or the temperature of the battery cell 100 reaches a threshold, the pressure relief structure 2 opens at least part of the through hole, and the discharge medium inside the battery cell 100 is discharged through the through hole to relieve the internal pressure of the battery cell 100.

It can be learned that, in the above technical solution, the pressure relief structure 2 and the first wall 11 are separate parts, and this facilitates mounting of the pressure relief structure 2 on the casing 1, simplifying manufacturing and achieving high efficiency. This improves the production efficiency of the battery cell 100.

For example, the pressure relief structure 2 is an explosion-proof sheet. The explosion-proof sheet is a sheet body whose strength in at least a part is less than a strength of the first wall 11. The explosion-proof sheet covers the through hole. The explosion-proof sheet is welded to the first wall 11. When the internal pressure or the temperature of the battery cell 100 reaches a threshold, at least part of the explosion-proof sheet is damaged, thereby opening at least part of the through hole to relieve the internal pressure of the battery cell 100.

In some embodiments, when the pressure relief structure 2 and the first wall 11 are integrally formed, an inner surface and/or an outer surface of the first wall 11 is provided with a recess 11a, and a bottom wall of the recess 11a forms the pressure relief structure 2. In the above technical solution, by providing the inner surface and/or the outer surface of the first wall 11 with the recess 11a, the bottom wall of the recess 11a forms the pressure relief structure 2, which facilitates the processing and formation of the pressure relief structure 2.

For example, the first wall 11 is the bottom wall of the casing 1. If the inner surface of the first wall 11 is provided with a recess 11a, then a part of an upper surface of the first wall 11 is recessed downward to form the recess 11a, and a lower groove wall of the recess 11a is the bottom wall. If the outer surface of the first wall 11 is provided with a recess 11a, then a part of the lower surface of the first wall 11 is recessed upward to form the recess 11a, and an upper groove wall of the recess 11a is the bottom wall.

In some embodiments, when the pressure relief structure 2 and the first wall 11 are integrally formed, the first wall 11 is formed with a score groove, a region of the first wall 11 corresponding to the score groove forms a weak part of the pressure relief structure 2, and the weak part is configured to rupture when the battery cell 100 relieves pressure. In the above technical solution, the first wall 11 is formed with a score groove, the region of the first wall 11 corresponding to the score groove forms a weak part of the pressure relief structure 2, facilitating the processing and formation of the pressure relief structure 2.

According to a second aspect, an embodiment of this application provides a battery 200, including the above battery cell 100.

In the above technical solution, since the above battery cell 100 is used in the battery 200, the use safety of the battery 200 is improved.

According to a third aspect, an embodiment of this application provides an electric device 1000, including the above battery 200, where the battery 200 is configured to provide electric energy.

In the above technical solution, since the electric device 1000 is provided with the above battery 200, and the battery 200 has high use safety, improving the safety of the electric device 1000.

Refer to FIG. 3 to FIG. 9 again. The battery cell 100 in specific embodiments of this application is described.

In the embodiments of this application, the battery cell 100 includes a casing 1, a pressure relief structure 2, and an electrode assembly 3. The casing 1 is provided with a first wall 11, a second wall 12, and two third walls 13 oppositely provided along the third direction. The first wall 11 and the second wall 12 are oppositely provided along the first direction. Each third wall 13 is adjacent to the first wall 11, and each third wall 13 is adjacent to the second wall 12. The pressure relief structure 2 is provided on the first wall 11. The electrode assembly 3 is provided in the casing 1. The electrode assembly 3 is a wound structure and includes a flat portion 3a, a first bending portion 3b, and a second bending portion 3c. The first bending portion 3b and the second bending portion 3c are respectively provided at two ends of the flat portion 3a along the first direction. A first boundary line $\Omega 1$ is provided between the first bending portion 3b and the flat portion 3a. The first bending portion 3b is located between the flat portion 3a and the first wall 11, and a surface of the first bending portion 3b facing the first wall 11 is a first arc surface. A second boundary line $\Omega 2$ is provided between the second bending portion 3c and the flat portion 3a. The second bending portion 3c is located between the flat portion 3a and the second wall 12, and a surface of the second bending portion 3c facing the second wall 12 is a second arc surface. A distance between the first boundary line $\Omega 1$ and the first wall 11 is $5\,\text{mm} \le L \le 30\,\text{mm}$, L is greater than or equal to a radius of the first arc surface, and L is greater than or equal to a distance L' between the second boundary line $\Omega 2$ and the second wall 12. Two side surfaces of the flat portion 3a along the third direction are flat surfaces. The first boundary line $\Omega 1$ may correspond to a flat surface parallel to the first wall 11, and the second boundary line $\Omega$ may correspond to a flat surface parallel to the second wall 12.

In the above technical solution, when the electrode assembly 3 swells and deforms, the pulling action on the pressure relief structure 2 on the first wall 11 can be weakened, reducing a probability that the pressure relief structure 2 fails or is pulled and damaged, and ensuring a volumetric energy density of the battery cell 100.

It should be noted that, in the case of no conflict, the embodiments in this application and the features in the embodiments can be combined with each other.

The above are only preferred embodiments of this application and are not used to limit this application. For those skilled in the art, various changes and modifications may be made to this application. Any modifications, equivalent replacements, improvements, and the like made within the spirit and principles of this application should be included in the protection scope of this application.

## Claims

1. A battery cell, comprising:

   a casing, wherein the casing is provided with a first wall;
   a pressure relief structure, wherein the pressure relief structure is provided on the first wall;
   an electrode assembly, wherein the electrode assembly is a wound electrode assembly and is provided in the casing, the electrode assembly comprises a flat portion and a first bending portion, and along a first direction, the first bending portion is provided on a side of the flat portion facing the first wall; and
   wherein a first boundary line is provided between the first bending portion and the flat portion, a distance between the first boundary line and the first wall is L, $L \ge 5\,\text{mm}$, and the first direction is perpendicular to an axial direction of the electrode assembly.

2. The battery cell according to claim 1, wherein the casing is further provided with a second wall; the second wall and the first wall are oppositely provided along the first direction; the electrode assembly further comprises a second bending portion; along the first direction, the second bending portion is provided on a side of the flat portion facing the second wall; a second boundary line is provided between the second bending portion and the flat portion; and the distance between the first boundary line and the first wall is greater than or equal to a distance between the second boundary line and the second wall.

3. The battery cell according to claim 1 or 2, wherein an inner surface of the first wall is formed with a boss, and the boss is provided opposite to the electrode assembly and is configured to support the electrode assembly.

4. The battery cell according to any one of claims 1 to 3, wherein a side surface of the first bending portion facing the first wall is an arc surface, a radius of the arc surface is R, and $R \leq L$.

5. The battery cell according to any one of claims 1 to 4, wherein the electrode assembly is provided in plurality, axial directions of the plurality of electrode assemblies are parallel, the plurality of electrode assemblies are stacked along the axial direction of the electrode assembly and/or a third direction, and the third direction is perpendicular to the axial direction of the electrode assembly and the first direction.

6. The battery cell according to any one of claims 1 to 5, further comprising:
an insulation member, wherein at least part of the insulation member is provided between the first wall and the electrode assembly.

7. The battery cell according to claim 6, wherein the at least part of the insulation member is provided between the pressure relief structure and the electrode assembly and is formed with a discharge portion, and the discharge portion comprises:

a first communication channel, wherein the first communication channel penetrates the insulation member along the first direction from a side of the insulation member facing the pressure relief structure; and/or
a second communication channel, wherein the second communication channel penetrates an outer peripheral wall of the insulation member along a direction perpendicular to the first direction from a side of the insulation member facing the pressure relief structure.

8. The battery cell according to claim 7, wherein a side of the at least part of the insulation member facing the pressure relief structure is formed with an avoidance groove, and the avoidance groove is disposed opposite to the pressure relief structure and communicates with the discharge portion.

9. The battery cell according to any one of claims 1 to 8, wherein $L \leq 30$ mm.

10. The battery cell according to any one of claims 1 to 9, wherein a thickness of the first wall is t1, and 0.4 mm $\leq$ t1 $\leq$ 2 mm.

11. The battery cell according to claim 10, wherein a width of the flat portion along the first direction is b, and 150 mm $\leq$ b $\leq$ 600 mm.

12. The battery cell according to claim 10 or 11, wherein a width of the flat portion along the first direction is b, and $0.0006 \leq$ t1/b $\leq 0.0135$.

13. The battery cell according to any one of claims 1 to 12, wherein a plurality of electrode sheet layers of the electrode assembly are stacked along the third direction, the casing has two third walls oppositely provided along the third direction, the first wall connects the two third walls, a thickness of the first wall is t1, a thickness of the third wall is t2, t1 > t2, and the third direction is perpendicular to the axial direction of the electrode assembly and the first direction.

14. The battery cell according to claim 13, wherein

$$0.4 \text{ mm} \leq t1 \leq 2 \text{ mm};$$

and/or

$$0.2 \text{ mm} \leq t2 \leq 1.5 \text{ mm};$$

and/or

$$0.08 \text{ mm}^2 \leq t1 \times t2 \leq 3 \text{ mm}^2;$$

and/or

$$t1 - t2 \leq 1.8 \text{ mm}.$$

15. The battery cell according to any one of claims 1 to 14, wherein the pressure relief structure and a pole of the battery cell are separately provided on walls on different sides of the casing.

16. The battery cell according to claim 15, wherein the casing comprises a casing body and a cover, one end of the casing body along the axial direction of the electrode assembly is open, the cover is provided at the open end of the casing body, the first wall is provided at an end of the casing body away from the open end, and the pole is provided on the cover.

**17.** The battery cell according to claim 15, wherein the casing comprises a casing body and covers, two ends of the casing body along the axial direction of the electrode assembly are open, the covers are provided at the open ends of the casing body, the first wall extends to the open ends on two sides, and each of the covers is provided with the pole.

**18.** The battery cell according to any one of claims 1 to 17, wherein the pressure relief structure and the first wall are integrally formed.

**19.** The battery cell according to claim 18, wherein an inner surface and/or an outer surface of the first wall are/is provided with a recess, and a bottom wall of the recess forms the pressure relief structure.

**20.** The battery cell according to claim 18 or 19, wherein the first wall is formed with a score groove, a region of the first wall corresponding to the score groove forms a weak part of the pressure relief structure, and the weak part is configured to rupture when the battery cell relieves pressure.

**21.** The battery cell according to any one of claims 1 to 17, wherein the pressure relief structure and the first wall are separately provided, and the pressure relief structure is mounted on the first wall.

**22.** A battery, comprising the battery cell according to any one of claims 1 to 21.

**23.** An electric device, comprising the battery according to claim 22, wherein the battery is configured to provide electric energy.

<u>1000</u>

300

400

200

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

EP 4 769 743 A1

FIG. 16    FIG. 17

FIG. 18

28

## INTERNATIONAL SEARCH REPORT

| International application No. |
| --- |
| **PCT/CN2023/135181** |

| A. | CLASSIFICATION OF SUBJECT MATTER |
| --- | --- |

H01M50/30(2021.01)i; H01M50/367(2021.01)i

According to International Patent Classification (IPC) or to both national classification and IPC

| B. | FIELDS SEARCHED |
| --- | --- |

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNABS, CNTXT, CNKI, IEEE, EPTXT, WOTXT, USTXT, VEN: 电池, 泄压, 壳体, 厚度, 侧面, 卷绕, 绝缘, 通道, 避让, battery, pressure relief, housing, thickness, sides, winding, insulation, channels

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 217768541 U (CONTEMPORARY AMPEREX TECHNOLOGY CO., LTD.) 08 November 2022 (2022-11-08)<br>description, paragraphs 0066-0133, and figure 3 | 1-3, 5, 9-12, 15-23 |
| Y | CN 217768541 U (CONTEMPORARY AMPEREX TECHNOLOGY CO., LTD.) 08 November 2022 (2022-11-08)<br>description, paragraphs 0066-0133, and figure 3 | 4, 6-8, 13-14 |
| Y | WO 2022266908 A1 (CONTEMPORARY AMPEREX TECHNOLOGY CO., LTD.) 29 December 2022 (2022-12-29)<br>description, paragraphs 0168-0169, and figure 11 | 4, 6-8 |
| Y | CN 217788704 U (CONTEMPORARY AMPEREX TECHNOLOGY CO., LTD.) 11 November 2022 (2022-11-11)<br>abstract | 13-14 |
| X | CN 116845474 A (CONTEMPORARY AMPEREX TECHNOLOGY CO., LTD.) 03 October 2023 (2023-10-03)<br>figures 9-10 | 1-3, 5, 9-12, 15-23 |

☑ Further documents are listed in the continuation of Box C. ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **17 June 2024** | **01 August 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2023/135181** |

| C. | DOCUMENTS CONSIDERED TO BE RELEVANT | |
|---|---|---|
| Category* | Citation of document, with indication, where appropriate, of the relevant passages | Relevant to claim No. |
| Y | CN 116845474 A (CONTEMPORARY AMPEREX TECHNOLOGY CO., LTD.) 03 October 2023 (2023-10-03)<br>figures 9-10 | 4, 6-8, 13-14 |
| A | CN 116137357 A (CONTEMPORARY AMPEREX TECHNOLOGY CO., LTD.) 19 May 2023 (2023-05-19)<br>entire document | 1-23 |
| A | CN 215989099 U (CONTEMPORARY AMPEREX TECHNOLOGY CO., LTD.) 08 March 2022 (2022-03-08)<br>entire document | 1-23 |
| A | CN 217158410 U (CONTEMPORARY AMPEREX TECHNOLOGY CO., LTD.) 09 August 2022 (2022-08-09)<br>entire document | 1-23 |
| A | CN 218513629 U (CONTEMPORARY AMPEREX TECHNOLOGY CO., LTD.) 21 February 2023 (2023-02-21)<br>entire document | 1-23 |

Form PCT/ISA/210 (second sheet) (July 2022)

## INTERNATIONAL SEARCH REPORT
### Information on patent family members

International application No.

**PCT/CN2023/135181**

| Patent document cited in search report | | | Publication date (day/month/year) | Patent family member(s) | | | Publication date (day/month/year) |
|---|---|---|---|---|---|---|---|
| CN | 217768541 | U | 08 November 2022 | None | | | |
| WO | 2022266908 | A1 | 29 December 2022 | KR | 20230001010 | A | 03 January 2023 |
| | | | | EP | 4156398 | A1 | 29 March 2023 |
| | | | | EP | 4156398 | A4 | 30 August 2023 |
| | | | | US | 2022416360 | A1 | 29 December 2022 |
| | | | | JP | 2023534585 | A | 10 August 2023 |
| | | | | CA | 3224900 | A1 | 29 December 2022 |
| | | | | CN | 115715438 | A | 24 February 2023 |
| CN | 217788704 | U | 11 November 2022 | WO | 2023173429 | A1 | 21 September 2023 |
| CN | 116845474 | A | 03 October 2023 | None | | | |
| CN | 116137357 | A | 19 May 2023 | None | | | |
| CN | 215989099 | U | 08 March 2022 | None | | | |
| CN | 217158410 | U | 09 August 2022 | WO | 2023173414 | A1 | 21 September 2023 |
| CN | 218513629 | U | 21 February 2023 | WO | 2024059968 | A1 | 28 March 2024 |

Form PCT/ISA/210 (patent family annex) (July 2022)